(19) Europäisches Patentamt
European Patent Office
Office européen des brevets

(11) **EP 2 130 426 A2**

(12) **EUROPÄISCHE PATENTANMELDUNG**

(43) Veröffentlichungstag:
**09.12.2009 Patentblatt 2009/50**

(51) Int Cl.:
***A01G 9/18*** *(2006.01)*

(21) Anmeldenummer: **09162039.3**

(22) Anmeldetag: **05.06.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **05.06.2008 DE 102008027635**

(71) Anmelder: **Institut für Gemüse- & Zierpflanzenbau e.V.**
**14979 Grossbeeren (DE)**

(72) Erfinder: **Kläring, Hans-Peter**
**14979 Großbeeren (DE)**

(74) Vertreter: **Gulde Hengelhaupt Ziebig & Schneider**
**Patentanwälte - Rechtsanwälte**
**Wallstraße 58/59**
**10179 Berlin (DE)**

(54) **Verfahren und Anordnung zur Kohlendioxid-Versorgung von in einem Gewächshaus angebauten Pflanzen**

(57) Die Erfindung betrifft ein Verfahren und eine Anordnung zur optimalen Kohlendioxid ($CO_2$)-Versorgung von in einem Gewächshaus angebauten Pflanzen mittels technischem oder durch Verbrennen von Gas bereitgestelltem $CO_2$ mit dem Ziel, die $CO_2$-Zufuhrrate und damit die $CO_2$-Konzentration für die gegebenen meteorologischen und mikrometeorologischen Bedingungen außerhalb bzw. innerhalb des Gewächshauses einzustellen, welche die Differenz aus Erlös und $CO_2$-Kosten maximiert, wobei der Erlös aus dem Ertrag den sich aus der $CO_2$-Zufuhrrate ergebenden $CO_2$-Kosten gegenübergestellt wird. Dabei wird Ertrag der Pflanzen mit einem an sich bekannten, allgemeingültigen Modell des Netto-$CO_2$-Gaswechsels von C3-Pflanzen ermittelt und hängt unter anderem wesentlich von der $CO_2$-Konzentration im Gewächshaus ab, welche von der $CO_2$-Zufuhrrate und der Luftwechselrate bestimmt wird, wobei die Luftwechselrate aus der Wasserdampfbilanz des Gewächshauses berechnet wird.

Fig. 2

EP 2 130 426 A2

**Beschreibung**

Die Erfindung betrifft ein Verfahren und eine Anordnung zur Optimierung der Kohlendioxid ($CO_2$)-Versorgung von in einem Gewächshaus angebauten Pflanzen mittels technischem oder durch Verbrennen von Gas bereitgestelltem $CO_2$, wobei die zeitspezifische Netto-$CO_2$-Aufnahme ($P_{net}$) der Pflanzen und der Erlös des daraus resultierenden Ertrags gegen die Kosten für die zeitspezifische $CO_2$-Versorgung optimiert wird, sowie ein entsprechendes Computerprogramm oder ein Speichermedium, auf dem ein solches Computerprogramm gespeichert ist.

Es ist bekannt, dass durch die Zufuhr von $CO_2$ zur Gewächshausluft die Erträge der angebauten Pflanzen deutlich gesteigert werden können. Das zugeführte $CO_2$ stammt zum Beispiel aus den Abgasen der Gewächshausheizung, welche bei der Verbrennung von Erdgas kostenneutral zur Verfügung stehen und ohne weitere Aufbereitung ins Gewächshaus eingeleitet werden können oder es wird technisches $CO_2$ verwendet. Möglich ist auch die Verbrennung von Erdgas oder Flüssiggas (Propan) direkt im Gewächshaus.

Bekannt ist die geregelte Zufuhr von $CO_2$ nach vorgegebenen Sollwerten, das heißt bis zum Erreichen einer vorgegebenen Konzentration wird $CO_2$ zugeführt, bei Überschreiten der Konzentration wird die Zufuhr gestoppt. Dieser Sollwert wird empirisch gewählt und teilweise bei Lüftung der Gewächshäuser verändert. Eine solche $CO_2$-Regelung ist beispielsweise aus DE 37 80 614 A1 bekannt.

Der Nachteil der Regelung nach Sollwerten besteht in der Ungewissheit des Verbrauches von $CO_2$, da keine Kontrolle oder Limitierung der Kosten für das $CO_2$, insbesondere bei geöffneter Gewächshauslüftung, möglich ist. Ohne Kenntnis der $CO_2$-Kosten für das bei Einstellen eines bestimmten Sollwertes unter den jeweils herrschenden meteorologischen Bedingungen ist dann auch keine Kosten-Nutzen-Gegenüberstellung möglich, selbst wenn der Ertrag bei gegebenem Sollwert bekannt ist. Darüber hinaus erfordert diese Regelung eine genaue Messung der $CO_2$-Konzentration, welche aufgrund des relativ hohen Gerätepreises, vor allem aber aufgrund der Anforderungen an Kalibrierung und Wartung in gärtnerischen Betrieben häufig nicht gegeben ist.

Aus DE 36 14 387 A1 sind auch ein Verfahren und eine Vorrichtung zur Kohlendioxidversorgung von Pflanzen bekannt, nach denen keine direkte Messung der $CO_2$-Konzentration mittels Gasanalyse erfolgen soll. Stattdessen soll die Flamme eines Vergleichsgases beobachtet werden, die sich bei einem bestimmten $CO_2$-Anteil in der Raumluft von ihrem Brenner entfernt. Diese, für den Bereich von 500-5000 ppm vorgeschlagene, indirekte Art der $CO_2$-Konzentrationsbestimmung ist jedoch nicht hinreichend genau, insbesondere, wenn die $CO_2$-Konzentration Werte von weniger als 500 ppm annimmt. Es bleibt außerdem der bereits angesprochene Nachteil eines unkontrollierten Verbrauchs von $CO_2$, zumal keine Kopplung mit der Lüftungsstellung des Gewächshauses vorgesehen ist.

Es wurde bereits vorgeschlagen, zeitspezifisch die Netto-$CO_2$-Aufnahme ($P_{net}$) der Pflanzen mit einem an sich bekannten, für einen bestimmten Temperaturbereich, der die Gewächshausinnentemperatur enthält, gültigen und eine $CO_2$-Konzentration, die der $CO_2$-Konzentration der Außenatmosphäre entspricht, allgemeingültigen Modell des Netto-$CO_2$-Gaswechsels von C3-Pflanzen in Abhängigkeit von der Blattfläche der Pflanzen und der photosynthetisch aktiven Strahlung (*PAR*), die außerhalb des Gewächshauses direkt gemessen oder aus einer dort gemessenen Strahlungsgröße abgeleitet wird, zu berechnen und durch Zufuhr der entsprechenden Menge $CO_2$ zu kompensieren. Die Kompensierung erfolgt, solange wie der zeitspezifische, gegenüber einem nicht mit $CO_2$ versorgten Gewächshaus zu erwartende erhöhte Erlös der im Gewächshaus angebauten Erzeugnisse, der aus dem zu erwartenden $CO_2$-spezifischen Ertragszuwachs anhand der photosynthetisch aktiven Strahlung (*PAR*) und der Lufttemperatur (*T*) außerhalb des Gewächshauses sowie des aktuellen Preises für das produzierte Erzeugnis abgeleitet wird, größer ist als die Kosten für die $CO_2$-Zufuhr, siehe Kläring et al., Model-based Control of CO2-Concentration in Greenhouses at Ambient Levels Increases Cucumber Yield, Agriculture and Forest Meteorology 143 (2007) 208-216, ebenso DE 10 2006 054 504.

Die Berechnung erfolgt in bevorzugter Weise in Zeittakten. Die $CO_2$-Zufuhr kann ebenfalls in (möglichst den gleichen) Zeittakten oder auch kontinuierlich erfolgen.

Das Verfahren hat einen Selbstregelungseffekt (Feedback Regelung) insofern, als dass bei Sinken der $CO_2$-Konzentration im Gewächshaus unter den Wert der Außenatmosphäre (gegenwärtig 380 ppm, Tendenz steigend) aus irgendwelchen Gründen mit dem konstanten Wert der $CO_2$-Konzentration eine höhere $CO_2$-Zufuhr berechnet wird als bei einer Rechnung auf der Grundlage der realen Konzentration im Gewächshaus, so dass die $CO_2$-Aufnahme der Pflanzen überschätzt, die $CO_2$-Zufuhr überhöht und so der angestrebte Wert der $CO_2$-Konzentration wieder angenähert wird. (Ein Übersteigen der $CO_2$-Konzentration würde umgekehrt durch Unterschätzung der $CO_2$-Aufnahme und verringerte $CO_2$-Zufuhr ebenfalls zur Annäherung $CO_2$-Konzentration im Gewächshaus an die vorgegebene $CO_2$-Konzentration der Umgebungsluft führen).

Das Verfahren hat gegenüber den vorherigen Lösungen den Vorteil, dass die eingesetzte Menge an $CO_2$ nur auf der Basis einer Messung der Außenstrahlung und der Blattfläche leicht abschätzbar ist. Es ist eine effektive Methode, welche sehr einfach zu realisieren ist, schon zu deutlichen Ertragssteigerungen führt und den Verbrauch von $CO_2$ begrenzt.

Das Verfahren stellt jedoch nicht die optimale Lösung dar, weil bei geschlossener und wenig geöffneter Gewächshauslüftung höhere $CO_2$-Konzentrationen als die Außenkonzentration, welche durch eine Überkompensation des von den Pflanzen aufgenommenen $CO_2$ erreicht werden, ökonomisch vorteilhaft sein können.

Für die Einstellung der ökonomisch optimalen $CO_2$-Konzentration im Gewächshaus müsste die $CO_2$-Zufuhr derart geregelt werden, dass die Funktion

$$\text{Erlös} - CO_2\text{-Kosten} \rightarrow \text{Max} \qquad\qquad [1]$$

ihr Maximum annimmt. Der Erlös kann mit Hilfe von Modellen der Photosynthese und einem Faktor für den je Gramm assimiliertem $CO_2$ erzielbaren Erlös abgeschätzt werden. Die $CO_2$-Kosten ergeben sich aus der zugeführten Menge und dem $CO_2$-Preis. Die Schwierigkeit bei diesem Ansatz besteht jedoch in der Ermittlung der einer $CO_2$-Zufuhrrate zuzuordnenden $CO_2$-Konzentration im Gewächshaus und damit der Photosynthese, da die $CO_2$-Konzentration im Gewächshaus neben der $CO_2$-Zufuhrrate auch von der Luftwechselrate des Gewächshauses mit der Umgebung und der Photosynthese selbst abhängt. Beide Prozesse variieren bei der bei den meisten Gewächshäusern üblichen freien Lüftung stark mit den meteorologischen Bedingungen außerhalb des Gewächshauses und den eingestellten Sollwerten für die Regelung der Temperatur und relativen Luftfeuchtigkeit im Gewächshaus. Letztere resultieren aus Erfordernissen für die längerfristige Entwicklung der Pflanzenbestände, für die Qualität des Ernteprodukts sowie für die Vermeidung von Pflanzenkrankheiten und sollen bei der Optimierung als gegeben angesehen werden.

Der Erfindung liegt die Aufgabe zugrunde, ein Verfahren und eine Anordnung anzugeben, mit denen unter den jeweiligen meteorologischen Bedingungen und den eingestellten Sollwerten für Temperatur und Luftfeuchtigkeit im Gewächshaus der $CO_2$-kostenfreie Gewinn, d.h. die Differenz aus Erlös und $CO_2$-Kosten, maximiert wird. Das Verfahren soll mit einem entsprechenden Messwerterfassungssystem und einem Computerprogramm oder einem Speichermedium, auf dem ein solches Computerprogramm gespeichert ist, realisierbar sein.

Erfindungsgemäß wird die Aufgabe gelöst durch die Merkmale der Ansprüche 1, 14, 15 und 16. Zweckmäßige Ausgestaltungen sind Gegenstand der Unteransprüche.

Danach wird

1) die Luftwechselrate aus den gemessenen meteorologischen Bedingungen innerhalb und außerhalb des Gewächshauses bestimmt,

2) die ökonomisch optimale $CO_2$-Konzentration und die zugehörige $CO_2$-Zufuhrrate für die Luftwechselrate und die gemessenen meteorologischen Bedingungen berechnet, und

3) $CO_2$ entsprechend der berechneten Rate dem Gewächshaus zugeführt.

Zur Berechnung der Luftwechselrate und der optimalen $CO_2$-Zufuhrrate ist ein Messwerterfassungssystem erforderlich, welches Werte für die Lufttemperatur ($T$) und die relative Luftfeuchtigkeit ($RF$) innerhalb ($i$) und außerhalb ($a$) des Gewächshauses, erforderlichenfalls die Temperatur der Gewächshaushülle innen ($T_h$) sowie die Globalstrahlung ($Q$) und photosynthetisch aktive Strahlung ($PAR$) außerhalb des Gewächshauses hinreichend genau bereitstellt. PAR und $Q$ können auch näherungsweise ineinander umgerechnet bzw. auch aus Messungen der Beleuchtungsstärke berechnet werden. Die Oberflächentemperatur der Hülle ($T_h$) innerhalb des Gewächshauses kann auch als Mittelwert zwischen Innen- und Außenlufttemperatur angenommen werden, sofern die Kondensation an der Gewächshaushülle bei der Berechnung überhaupt berücksichtigt wird.

Die auf einen $m^2$ Gewächshausfläche bezogene Luftwechselrate ($L$) des Gewächshauses kann unter der vereinfachenden Annahme der Stationarität aus der Wasserdampfbilanz des Gewächshauses abgeleitet werden:

$$L = \frac{TR - KO}{W_i - W_a} \qquad\qquad (\text{m}^3\ \text{m}^{-2}\ \text{h}^{-1}) \qquad [2]$$

Hierbei ist $TR$ die Transpirationsrate der Pflanzen, welche mit einem an sich bekannten Modell der Transpiration in Abhängigkeit vom Beleuchtungsstärkequotienten des Gewächshauses ($BQ$), dem Blattflächenindex des Pflanzenbestands ($LAI$), der Globalstrahlung $Q$, der Gewächshausinnentemperatur $T_i$ und der Luftfeuchtigkeit im Gewächshaus $RF_i$ berechnet wird (Genaueres dazu ist z.B. in Stanghellini C. 1987, Transpiration of greenhouse crops: an aid to climate management, PhD thesis Agricultural University Wageningen, The Netherlands, zu finden). Wenn erforderlich können weitere Einflussfaktoren wie die Substratfeuchte oder der Salzgehalt in der Wurzelumgebung in das Transpirationsmodell aufgenommen werden. Oft ist aber auch eine starke Vereinfachung hinreichend genau, beispielsweise eine Beschränkung auf die Globalstrahlung als einzige Einflussvariable (siehe dazu auch Stanghellini 1987). Wenn die Verdunstung an der Bodenoberfläche einen entscheidenden Beitrag zur Wasserdampfbilanz des Gewächshauses liefert, ist ein an sich bekanntes Modell der Evapotranspiration zu verwenden.

$KO$ ist die Kondensation von Wasserdampf an der Gewächshaushülle, welche über an sich bekannte Modelle näherungsweise aus der Temperatur der Gewächshaushülle $T_h$, der Gewächshausinnentemperatur $T_i$ und der Luftfeuchtigkeit im Gewächshaus $RF_i$ berechnet wird (Genaueres dazu ist z.B. in Bakker J.C. 1986, Measurement of canopy transpiration or evapotranspiration in greenhouses by means of a simple vapour balance model, Agricultural and Forest Meteorology 37, 133-141, zu finden). Für eine einfache Variante des Verfahrens kann die Berechnung der Kondensation von Wasserdampf auch unberücksichtigt bleiben.

$W_i$ bzw. $W_a$ sind die Wasserdampfgehalte der Luft im Gewächshaus und im Freien, welche mit allgemein bekannten Näherungsformeln aus der Gewächshausinnentemperatur $T_i$ und der Luftfeuchtigkeit im Gewächshauses $RF_i$ bzw. der Außentemperatur $T_a$ und der Luftfeuchtigkeit außerhalb des Gewächshauses $RF_a$ berechnet werden.

Die $CO_2$-Konzentration im Gewächshaus ($C_i$) und die Netto-$CO_2$-Aufnahme der Pflanzen ($P_{net}$) können bei gegebener $CO_2$-Zufuhrrate ($Z$) aus

$$C_i = C_a + \frac{Z - P_{net}(LAI, BQ \cdot PAR, T_i, C_i)}{L} \qquad (\mathrm{g\ m^{-3}}) \qquad [3]$$

berechnet werden, wobei $C_a$ die als konstant angesehene $CO_2$-Konzentration in der Umgebung des Gewächshauses und $P_{net}$ eine an sich bekannte empirische Funktion des Netto-$CO_2$-Gaswechsels sind (Genaueres dazu ist z.B. in Kläring et al. 2007, Model-based Control of CO2-Concentration in Greenhouses at Ambient Levels Increases Cucumber Yield, Agriculture and Forest Meteorology 143 (2007), S. 208-216, zu finden).

Wenn erforderlich, können weitere Einflussfaktoren wie die Substratfeuchte oder der Salzgehalt in der Wurzelumgebung in das $CO_2$-Gaswechselmodell aufgenommen werden. Oft ist aber auch eine starke Vereinfachung hinreichend genau, beispielsweise eine Beschränkung auf die photosynthetisch aktive Strahlung als einzige Einflussvariable (siehe auch Kläring et al. 2007). Die Wirkung der $CO_2$-Konzentration auf die Transpiration und damit auf die Luftwechselrate wird hierbei vernachlässigt.

Da $C_i$ von $P_{net}$ und $P_{net}$ von $C_i$ abhängen, kann die Lösung iterativ erhalten werden, beispielsweise, indem man in einem ersten Schritt für $C_i$ die Außenkonzentration zur Berechnung von $P_{net}$ einsetzt, damit eine erste Näherung für $C_i$ erhält, diese in einem zweiten Schritt in $P_{net}$ einsetzt und so schon nach drei Schritten eine hinreichend genaue Lösung für $C_i$ und $P_{net}$ erhält.

Die ökonomisch optimale $CO_2$-Zufuhrrate $Z_{opt}$ ist diejenige, welche den $CO_2$-kostenfreien Erlös

$$f(Z) = k_{MP} \cdot k_{umw} \cdot P_{net}(Z) - k_{CO2} \cdot Z \qquad (\mathrm{Cent\ m^{-2}\ h^{-1}}) \qquad [4]$$

maximiert, wobei $k_{MP}$ ein Koeffizient für den Marktpreis je Produkteinheit, $k_{umw}$ ein Koeffizient für die Umwandlung von Einheiten aufgenommenen $CO_2$ in Produkteinheiten und $k_{CO2}$ der Preis je Einheit zugeführten $CO_2$ bedeuten.

Die Koeffizienten $k_{umw}$, $k_{MP}$ oder $k_{CO2}$ können eine Funktion des Zustands der Pflanzen bzw. von der Zeit abhängig sein und gegebenenfalls als solche dargestellt werden.

Sehr einfach findet man $Z_{opt}$ beispielsweise, indem man die konkave Funktion $f(Z)$ bei $Z_0=0$ beginnend und hinreichend kleine $h$ für $Z_{i+1}=Z_i+h$ iterativ berechnet bis $f(Z_{i+1}) < f(Z_i)$.

Die Berechnung der optimalen $CO_2$-Zufuhrrate erfolgt in bevorzugter Weise in geeignet großen Zeittakten t (0.05-0.25 h).

Die Einstellung der optimalen $CO_2$-Zufuhrrate erfolgt dann für den nächsten Zeittakt in der Annahme, dass sich die Bedingungen nur vernachlässigbar geändert haben. Die optimale Zufuhrrate kann über einen Massestromdurchflussregler direkt eingestellt werden oder einfacher über die Berechnung einer relativen Ventilöffnungszeit zu Beginn des folgenden Zeittakts bei bekannter konstanter Durchflussrate.

Eine entsprechende Anordnung, die eine Messwerterfassung umfasst, eine Datenverarbeitungsanlage, ein Computerprogramm oder ein computerlesbares Speichermedium, das ein Programm zur Durchführung des Verfahrens enthält, sind jeweils so eingerichtet, dass sie, folgende Schritte durchführen:

- zunächst wird die Luftwechselrate (*L*) des Gewächshauses aus der Wasserdampfbilanz der Gewächshausluft mit Hilfe von an sich bekannten Modellen für die Transpiration von Pflanzen und erforderlichenfalls die Kondensation von Wasserdampf an der Gewächshaushülle anhand gemessener Werte der Umweltvariablen Globalstrahlung (*Q*), Lufttemperatur und relative Luftfeuchtigkeit innerhalb und außerhalb des Gewächshauses (*T_i*, *RF_i*, *T_a*, *RF_a*) und erforderlichenfalls der Temperatur der Gewächshaushülle innen (*T_h*) abgeleitet,

- für diese Luftwechselrate (*L*) wird die ökonomisch optimale $CO_2$-Zufuhrrate (*Z_opt*) bei gegebenen Preisen für das Ernteprodukt und das $CO_2$ mit Hilfe eines an sich bekannten Modells der Netto-$CO_2$-Aufnahme der Pflanzen und eines Faktors für die Umwandlung von aufgenommenem $CO_2$ in Ertragseinheiten aus gemessenen Werten der Lufttemperatur im Gewächshaus (*T_i*), der photosynthetisch aktiven Strahlung (*PAR*), dem Beleuchtungsstärkequotienten des Gewächshauses (*BQ*) und dem Blattflächenindex (*LAI*) iterativ berechnet,

- die berechnete optimale Zufuhrrate *Z_opt* wird an das Gewächshaus freigegeben.

Das Verfahren hat gegenüber bisherigen Lösungen, bei denen in der Regel ein Sollwert für die $CO_2$-Konzentration empirisch gewählt wird, den Vorteil, dass die unter den aktuellen meteorologischen Bedingungen und den aus anderen Gesichtspunkten notwendigen Sollwerten für die Regelung der Lufttemperatur und der relativen Luftfeuchtigkeit im Gewächshaus die ökonomisch optimale $CO_2$-Konzentration im Gewächshaus eingestellt wird.

Das Verfahren kommt ohne eine Messung der $CO_2$-Konzentration aus.

Komplizierte Modelle des Pflanzenwachstums und des Gewächshausklimas mit meistens nicht verfügbaren Parametern für verschiedene Pflanzenarten und Gewächshaustypen werden nicht benötigt.

Die für die Berechnung der Netto-$CO_2$-Aufnahme nötige Blattfläche lässt sich auf einfache Weise hinreichend genau abschätzen (Genaueres dazu ist z.B. in Schwarz D. und Kläring, H.-P. 2001, Allometry to estimate leaf area of tomato, Journal of Plant Nutrition 24 (8), 1291-1309, zu finden).

Die eingesetzte Menge an $CO_2$ ist durch die Regelung der $CO_2$-Zufuhrrate begrenzt und somit ein bei Regelung nach $CO_2$-Sollwerten unkontrollierter $CO_2$-Verbrauch nicht möglich.

Alle benötigten Messwerte mit Ausnahme der Hüllentemperatur und alle Stellglieder sind bei kommerziellen Anlagen zur Regelung des Gewächshausklimas bereits vorhanden.

Gegebenenfalls können weitere klimatische Einflussgrößen oder Bedingungen in der Wurzelumgebung oder Zustandsvariablen der Pflanzen in die Modelle der Transpiration, der Netto-$CO_2$-Aufnahme oder der Kondensation von Wasserdampf an der Gewächshaushülle aufgenommen werden bzw. wenig sensitive Einflussgrößen weggelassen werden.

Die Gleichungen [3] und [4] können mit anderen mathematischen Verfahren als den oben als Beispiel angegebenen Iterationsverfahren gelöst bzw. optimiert werden.

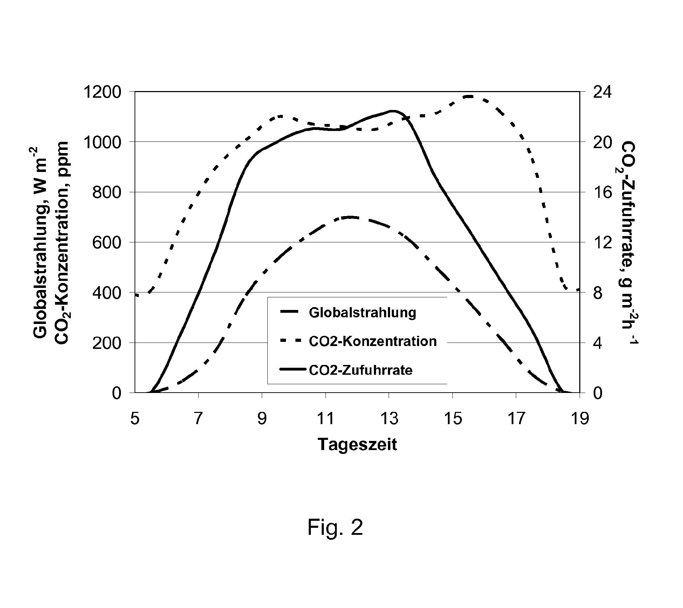

Erfahrungsgemäß steigen die so für die Gewächshausluft berechneten optimalen $CO_2$-Konzentrationen in den Morgenstunden sehr schnell an und sinken in den Abendstunden schnell ab (Fig. 2). Infolge der Annahme der Stationarität stellen sich die berechneten $CO_2$-Konzentrationen im Gewächshaus nur verzögert ein. Dem kann begegnet werden, indem der Trend der berechneten optimalen $CO_2$-Konzentrationen, etwa der letzten Stunde, berechnet wird und die Zufuhrrate *Z_opt* derart korrigiert wird, dass der Anstieg bzw. Abfall der berechneten optimalen $CO_2$-Konzentration möglichst realisiert wird, z.B. nach:

$$Z'_{opt} = Z_{opt} + h \cdot \Delta C_i \qquad (\mathrm{g\ m^{-2}\ h^{-1}}) \qquad [5]$$

wobei *h* die mittlere Höhe des Gewächshauses und $\Delta C_i$ die sich aus dem mittelfristigen Trend für einen Zeittakt t ergebende Änderung der berechneten $CO_2$-Konzentrationen sind. Das wird nicht immer vollständig erreicht werden können, weil in den Morgenstunden die Auslegung der $CO_2$-Zufuhr die erforderlichen hohen $CO_2$-Zufuhrraten *Z'_opt* nicht immer zulässt, vor allem aber, weil in den Abendstunden negative Werte für *Z'_opt* ermittelt werden können und dann selbst bei gesperrter $CO_2$-Zufuhr die $CO_2$-Aufnahme der Pflanzen und der Luftwechsel bei geschlossener Gewächshauslüftung die $CO_2$-Konzentration in modernen, sehr dichten und hohen Gewächshäusern nicht ausreichend verringern. Aus diesem Grund ist es auch sinnvoll, zusätzlich den mittelfristigen Trend der optimalen $CO_2$-Zufuhrraten zu betrachten und die $CO_2$-Zufuhrrate nicht allein nach der Differenz der berechneten optimalen $CO_2$-Zufuhrraten von aufeinander folgenden Takten zu korrigieren.

Die Erfindung soll nachstehend anhand eines Ausführungsbeispiels näher erläutert werden. In den zugehörigen Zeichnungen zeigen

Fig. 1    ein Flussbild für eine Optimierung der $CO_2$-Versorgung eines Pflanzenbestandes im Gewächshaus und

Fig. 2    den Verlauf von Globalstrahlung, optimaler $CO_2$ Zufuhrrate und optimaler $CO_2$-Konzentration an einem aus- gewählten Tag.

Im Minutentakt wurden die Umweltvariablen Globalstrahlung ($Q$), photosynthetisch aktive Strahlung ($PAR$), Lufttemperatur und relative Luftfeuchte innerhalb und außerhalb des Gewächshauses ($T_i$, $T_a$, $RF_i$, $RF_a$) gemessen und über drei Minuten gemittelt. Die Oberflächentemperatur der Hülle ($T_h$) innerhalb des Gewächshauses wurde als Mittelwert der Innen und Außenlufttemperatur angenommen. Die Transpiration der Pflanzen ($TR$), die Kondensation von Wasserdampf an der Gewächshaushülle ($KO$) und schließlich die Lüftungsrate ($L$) des Gewächshauses wurden alle drei Minuten aus den Mittelwerten der Umweltvariablen Globalstrahlung ($Q$), Lufttemperatur und relative Luftfeuchtigkeit innerhalb und außerhalb des Gewächshauses ($T_i$, $LF_i$, $T_a$, $LF_a$) sowie Oberflächentemperatur der Hülle ($T_h$) innerhalb des Ge- wächshauses und der wöchentlich gemessenen Blattfläche prognostiziert, wobei die Globalstrahlung ($Q$) im Gewächshaus durch Multiplikation der Außenglobalstrahlung mit dem Bestrahlungsstärkequotienten des Gewächshauses ermittelt wurde.

Für die prognostizierte Lüftungsrate $L$, die gegebenen Preise für $CO_2$ und das Ernteprodukt, den bekannten Faktor für die Umwandlung von aufgenommenem $CO_2$ in das Ernteprodukt und die wöchentlich bestimmte Blattfläche wurde aus den gemessenen Umweltvariablen Lufttemperatur im Gewächshaus ($T_i$) und photosynthetisch aktive Strah- lung ($PAR$) außerhalb des Gewächshauses, multipliziert mit dem Beleuchtungsstärkequotienten des Gewächshauses, mit Hilfe eines empirischen Modells der Photosynthese (siehe oben Kläring et al. 2007) mit iterativen Verfahren die optimale $CO_2$-Zufuhrrate ermittelt. Daraus ergab sich bei bekannter konstanter Durchflussrate eines $CO_2$-Ventils eine für den Zeittakt von drei Minuten erforderliche Ventilöffnungszeit $t_v$. Diese Ventilöffnungszeiten wurden akkumuliert. Wenn die akkumulierte Ventilöffnungszeit $t_v^{kum}$ größer war als drei Minuten, dann wurde für die nächsten drei Minuten das $CO_2$-Ventil geöffnet, der Gewächshausluft $CO_2$ zugeführt und die akkumulierte Zeit um drei Minuten verringert. Auf diese Weise musste kein zweiter Zeittakt für die $CO_2$-Versorgung eingeführt werden.

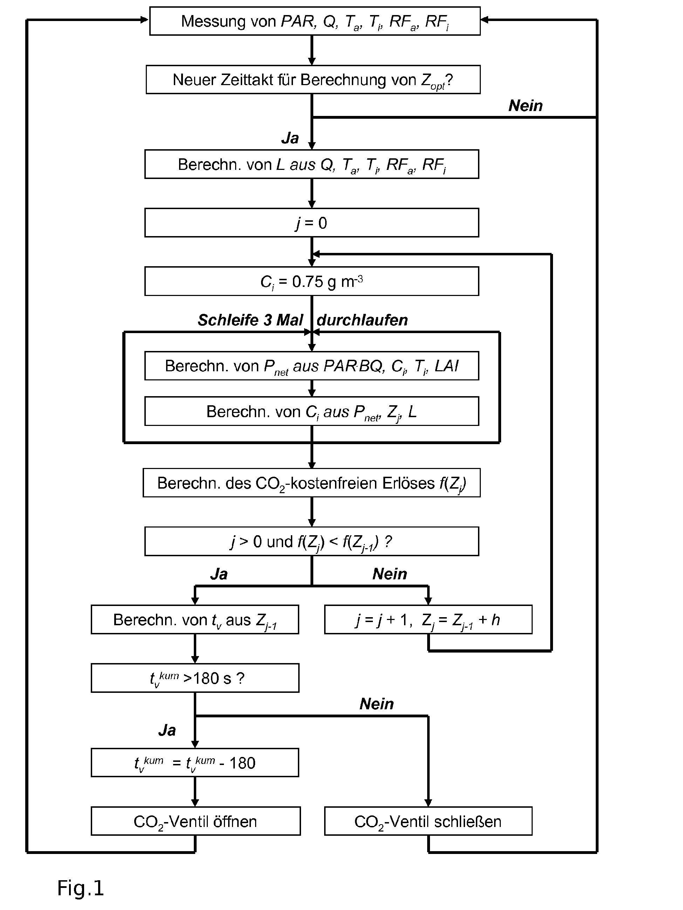

Fig. 1 zeigt das für die Durchführung des Verfahrens nötige Flussbild.
Die Messwerterfassung und Ventilsteuerung erfolgte mit einem kommerziellen Gewächshausregelsystem. Auf dem Leitrechner dieses Systems lief ein Programm zur Berechnung der optimalen $CO_2$-Zufuhrrate und der Ventilstellung. Der Austausch der Messdaten und Steueranweisungen zwischen dem Gewächshausregelsystem und dem Programm zur Berechnung der optimalen $CO_2$-Zufuhrrate und der Ventilstellung erfolgte über eine ODBC-Schnittstelle.
In Tests wurde die Wirkung des Verfahrens auf den Kohlendioxydgehalt im Gewächshaus, sowie auf das Wachstum und den Ertrag von Gurken geprüft, wobei die Wirksamkeit des Verfahrens bewiesen werden konnte.
Fig. 2 zeigt die für die in einem Gurkenbestand gemessenen Klimadaten (März) optimale $CO_2$-Zufuhrrate $Z$ und die sich dabei einstellende $CO_2$-Konzentration im Gewächshaus, berechnet für einen Gurkenbestand bei einem angenommenen Gurkenverkaufspreis von 70 Cent/kg und $CO_2$-Kosten von 30 Cent/kg.
Mit dem Verfahren konnten beim Anbau von Gurken im Frühjahr unter produktionsnahen Bedingungen Mehrerträge von 60 % gegenüber nicht mit $CO_2$ versorgten Gewächshäusern erzielt werden.
Die Lösung lässt sich in einfacher Weise auch separat, das heißt unabhängig von einem Gewächshausregelsystem, realisieren.
Anstelle der Zufuhr von technischem $CO_2$ kann gegebenenfalls auch Propan oder Erdgas im Gewächshaus verbrannt werden. Anstelle der Zufuhr in Impulsen ist auch eine kontinuierliche $CO_2$-Versorgung über eine Massefluss- regelung möglich.

**Patentansprüche**

**1.** Verfahren zur Optimierung der Kohlendioxid ($CO_2$)-Versorgung von in einem Gewächshaus angebauten Pflanzen mittels technischem oder durch Verbrennen von Gas bereitgestelltem $CO_2$, wobei die zeitspezifische Netto-$CO_2$-Auf- nahme ($P_{net}$) der Pflanzen berechnet und der Erlös des daraus resultierenden Ertrags gegen die Kosten für die zeitspezifische $CO_2$-Versorgung optimiert wird,
**dadurch gekennzeichnet, dass**
zur Bestimmung einer optimalen $CO_2$-Zufuhrrate ($Z_{opt}$) die Lufttemperatur und die relative Luftfeuchtigkeit innerhalb und außerhalb des Gewächshauses ($T_i$, $RF_i$, $T_a$, $RF_a$), die Globalstrahlung ($Q$) und/oder die photosynthetisch aktive Strahlung ($PAR$), und erforderlichenfalls die Temperatur der Gewächshaushülle innen ($T_h$), gemessen werden,

- die Luftwechselrate ($L$) des Gewächshauses aus der Wasserdampfbilanz der Gewächshausluft mit Hilfe von an sich bekannten Modellen für die Transpiration von Pflanzen und erforderlichenfalls die Kondensation von Wasserdampf an der Gewächshaushülle anhand der gemessenen Werte der Umweltvariablen Globalstrahlung

($Q$), Lufttemperatur und relative Luftfeuchtigkeit innerhalb und außerhalb des Gewächshauses ($T_i$, $RF_i$, $T_a$, $RF_a$) und erforderlichenfalls der Temperatur der Gewächshaushülle innen ($T_h$) abgeleitet wird

- für diese Luftwechselrate ($L$) die ökonomisch optimale $CO_2$-Zufuhrrate ($Z_{opt}$) bei gegebenen Preisen für das Ernteprodukt und das $CO_2$ mit Hilfe eines an sich bekannten Modells der Netto-$CO_2$-Aufnahme der Pflanzen und eines Faktors für die Umwandlung von aufgenommenem $CO_2$ in Ertragseinheiten aus den gemessenen Werten der Lufttemperatur im Gewächshaus ($T_i$), der photosynthetisch aktiven Strahlung *(PAR),* dem Beleuchtungsstärkequotienten des Gewächshauses ($BQ$) und dem Blattflächenindex ($LAI$) im Gewächshaus iterativ berechnet wird

- für den folgenden Zeitabschnitt die optimale $CO_2$-Zufuhrrate ($Z_{opt}$) eingestellt wird.

2. Verfahren nach Anspruch 1, **dadurch gekennzeichnet, dass** die Temperatur der Gewächshaushülle ($T_h$) aus einem Mittelwert der Lufttemperaturen innerhalb und außerhalb des Gewächshauses ($T_i$, $T_a$) gebildet wird.

3. Verfahren nach Anspruch 1, **dadurch gekennzeichnet, dass** der Wasserdampfgehalt aus einer Messung der Lufttemperatur ($T_i$, $T_a$) und der relativen Luftfeuchtigkeit ($RF_i$, $RF_a$) jeweils innerhalb und außerhalb des Gewächshauses bestimmt wird.

4. Verfahren nach Anspruch 2, **dadurch gekennzeichnet, dass** die Kondensation des Wasserdampfes an der Gewächshaushülle aus Messungen der Temperatur der Gewächshaushülle ($T_h$), der Temperatur und der relativen Luftfeuchtigkeit innerhalb des Gewächshauses ($T_i$, $RF_i$) berechnet wird.

5. Verfahren nach einem der vorhergehenden Ansprüche, **dadurch gekennzeichnet, dass**
die Netto-$CO_2$-Aufnahme ($P_{net}$) der Pflanzen mit einem an sich bekannten, für einen bestimmten Temperaturbereich, der die Gewächshausinnentemperatur ($T_i$) enthält, gültigen Modell des $CO_2$-Gaswechsels von C3-Pflanzen in Abhängigkeit von der Blattfläche der Pflanzen, der $CO_2$- Konzentration im Gewächshaus ($C_i$) und der photosynthetisch aktiven Strahlung ($PAR$), die außerhalb des Gewächshauses direkt gemessen oder aus einer dort gemessenen Strahlungsgröße abgeleitet wird, berechnet wird.

6. Verfahren nach Anspruch 5, **dadurch gekennzeichnet, dass**
die photosynthetisch aktive Strahlung ($PAR$) aus der Beleuchtungsstärke abgeleitet wird.

7. Verfahren nach einem der vorhergehenden Ansprüche, **dadurch gekennzeichnet, dass** die Berechnung der optimalen $CO_2$-Zufuhrrate $Z_{opt}$ und die Zufuhr von $CO_2$ in Zeittakten erfolgt.

8. Verfahren nach einem der vorhergehenden Ansprüche, **dadurch gekennzeichnet, dass**
die optimale $CO_2$-Zufuhrrate $Z_{opt}$ mehrerer Zeittakte so lange kumuliert und die Zufuhr der entsprechenden Menge $CO_2$ erst dann freigegeben wird, wenn die kumulierte Menge der optimalen $CO_2$-Zufuhrrate $Z_{opt}$ größer ist als die in einem Zeittakt durch ein Ventil fließende $CO_2$-Menge und/oder , dass
die $CO_2$-Zufuhr zum Gewächshaus in jedem Zeittakt entsprechend der ermittelten optimalen $CO_2$-Zufuhrrate $Z_{opt}$ erfolgt.

9. Verfahren nach Anspruch 8, **dadurch gekennzeichnet, dass**
für einen Zeittakt der stationäre Zustand des Systems angenommen wird und/oder, dass die $CO_2$-Zufuhr mit Hilfe eines Massestromdurchflussreglers durchgeführt wird.

10. Verfahren nach einem der vorhergehenden Ansprüche, **dadurch gekennzeichnet, dass**
als Gas Erdgas oder Propangas verbrannt wird.

11. Verfahren nach einem der vorhergehenden Ansprüche, **dadurch gekennzeichnet, dass**
die Zufuhrrate $Z_{opt}$ nach dem Trend der berechneten optimalen $CO_2$-Konzentrationen innerhalb eines bestimmten vergangenen Zeitraumes korrigiert wird.

12. Anordnung zur Kohlendioxid ($CO_2$)-Versorgung von in einem Gewächshaus angebauten Pflanzen mittels technischem oder durch Verbrennen von Gas bereitgestelltem $CO_2$, wobei die zeitspezifische Netto-$CO_2$-Aufnahme ($P_{net}$) der Pflanzen berechnet und der Erlös des daraus resultierenden Ertrags gegen die Kosten für die zeitspezifische $CO_2$-Versorgung optimiert wird, eine Datenverarbeitungsanlage umfassend, die derart eingerichtet ist, dass folgende Schritte durchführbar sind:

- zunächst wird die Luftwechselrate ($L$) des Gewächshauses aus der Wasserdampfbilanz der Gewächshausluft mit Hilfe von an sich bekannten Modellen für die Transpiration von Pflanzen und erforderlichenfalls die Kondensation von Wasserdampf an der Gewächshaushülle anhand gemessener Werte der Umweltvariablen Globalstrahlung ($Q$), Lufttemperatur und relative Luftfeuchtigkeit innerhalb und außerhalb des Gewächshauses ($T_i$, $RF_i$, $T_a$, $RF_a$) und erforderlichenfalls der Temperatur der Gewächshaushülle innen ($T_h$) abgeleitet,
- für diese Luftwechselrate ($L$) wird die ökonomisch optimale $CO_2$-Zufuhrrate ($Z_{opt}$) bei gegebenen Preisen für das Ernteprodukt und das $CO_2$ mit Hilfe eines an sich bekannten Modells der Netto-$CO_2$-Aufnahme der Pflanzen und eines Faktors für die Umwandlung von aufgenommenem $CO_2$ in Ertragseinheiten aus gemessenen Werten der Lufttemperatur im Gewächshaus ($T_i$), der photosynthetisch aktiven Strahlung ($PAR$), dem Beleuchtungsstärkequotienten des Gewächshauses ($BQ$) und dem Blattflächenindex ($LAI$) iterativ berechnet,
- die berechnete optimale Zufuhrrate $Z_{opt}$ wird an das Gewächshaus freigegeben.

**13.** Computerprogramm zur Kohlendioxid ($CO_2$)-Versorgung von in einem Gewächshaus angebauten Pflanzen mittels technischem oder durch Verbrennen von Gas bereitgestelltem $CO_2$, wobei die zeitspezifische Netto-$CO_2$-Aufnahme ($P_{net}$) der Pflanzen berechnet und der Erlös des daraus resultierenden Ertrags gegen die Kosten für die zeitspezifische $CO_2$-Versorgung optimiert wird, das es einem Computer erlaubt, nachdem es in den Speicher des Computers geladen wurde, folgende Schritte durchzuführen:

- zunächst wird die Luftwechselrate ($L$) des Gewächshauses aus der Wasserdampfbilanz der Gewächshausluft mit Hilfe von an sich bekannten Modellen für die Transpiration von Pflanzen und erforderlichenfalls die Kondensation von Wasserdampf an der Gewächshaushülle anhand gemessener Werte der Umweltvariablen Globalstrahlung ($Q$), Lufttemperatur und relative Luftfeuchtigkeit innerhalb und außerhalb des Gewächshauses ($T_i$, $RF_i$, $T_a$, $RF_a$) und erforderlichenfalls der Temperatur der Gewächshaushülle innen ($T_h$) abgeleitet,
- für diese Luftwechselrate ($L$) wird die ökonomisch optimale $CO_2$-Zufuhrrate ($Z_{opt}$) bei gegebenen Preisen für das Ernteprodukt und das $CO_2$ mit Hilfe eines an sich bekannten Modells der Netto-$CO_2$-Aufnahme der Pflanzen und eines Faktors für die Umwandlung von aufgenommenem $CO_2$ in Ertragseinheiten aus gemessenen Werten der Lufttemperatur im Gewächshaus ($T_i$), der photosynthetisch aktiven Strahlung ($PAR$), dem Beleuchtungsstärkequotienten des Gewächshauses ($BQ$) und dem Blattflächenindex ($LAI$) iterativ berechnet,
- die berechnete optimale Zufuhrrate $Z_{opt}$ wird an das Gewächshaus freigegeben.

**14.** Computerlesbares Speichermedium, auf dem ein Programm gespeichert ist, das es einem Computer ermöglicht, nachdem es in den Speicher des Computers geladen wurde, zur Kohlendioxid ($CO_2$)-Versorgung von in einem Gewächshaus angebauten Pflanzen mittels technischem oder durch Verbrennen von Gas bereitgestelltem $CO_2$, wobei die zeitspezifische Netto-$CO_2$-Aufnahme ($P_{net}$) der Pflanzen berechnet und der Erlös des daraus resultierenden Ertrags gegen die Kosten für die zeitspezifische $CO_2$-Versorgung optimiert wird, folgende Schritte durchzuführen:

- zunächst wird die Luftwechselrate ($L$) des Gewächshauses aus der Wasserdampfbilanz der Gewächshausluft mit Hilfe von an sich bekannten Modellen für die Transpiration von Pflanzen und erforderlichenfalls die Kondensation von Wasserdampf an der Gewächshaushülle anhand gemessener Werte der Umweltvariablen Globalstrahlung ($Q$), Lufttemperatur und relative Luftfeuchtigkeit innerhalb und außerhalb des Gewächshauses ($T_i$, $RF_i$, $T_a$, $RF_a$) und erforderlichenfalls der Temperatur der Gewächshaushülle innen ($T_h$) abgeleitet,
- für diese Luftwechselrate ($L$) wird die ökonomisch optimale $CO_2$-Zufuhrrate ($Z_{opt}$) bei gegebenen Preisen für das Ernteprodukt und das $CO_2$ mit Hilfe eines an sich bekannten Modells der Netto-$CO_2$-Aufnahme der Pflanzen und eines Faktors für die Umwandlung von aufgenommenem $CO_2$ in Ertragseinheiten aus gemessenen Werten der Lufttemperatur im Gewächshaus ($T_i$), der photosynthetisch aktiven Strahlung ($PAR$), dem Beleuchtungsstärkequotienten des Gewächshauses ($BQ$) und dem Blattflächenindex ($LAI$) iterativ berechnet,
- die berechnete optimale Zufuhrrate $Z_{opt}$ wird an das Gewächshaus freigegeben.

Messung von $PAR$, $Q$, $T_a$, $T_i$, $RF_a$, $RF_i$

Neuer Zeittakt für Berechnung von $Z_{opt}$?

**Nein**

**Ja**

Berechn. von $L$ aus $Q$, $T_a$, $T_i$, $RF_a$, $RF_i$

$j = 0$

$C_i = 0.75\ \mathrm{g\ m^{-3}}$

**Schleife 3 Mal durchlaufen**

Berechn. von $P_{net}$ aus $PAR$ $BQ$, $C_i$, $T_i$, $LAI$

Berechn. von $C_i$ aus $P_{net}$, $Z_j$, $L$

Berechn. des $CO_2$-kostenfreien Erlöses $f(Z_j)$

$j > 0$ und $f(Z_j) < f(Z_{j-1})$ ?

**Ja**

**Nein**

Berechn. von $t_v$ aus $Z_{j-1}$

$j = j + 1$, $Z_j = Z_{j-1} + h$

$t_v^{kum} > 180\ \mathrm{s}$ ?

**Nein**

**Ja**

$t_v^{kum} = t_v^{kum} - 180$

$CO_2$-Ventil öffnen

$CO_2$-Ventil schließen

Fig.1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3780614 A1
- DE 3614387 A1
- DE 102006054504

**In der Beschreibung aufgeführte Nicht-Patentliteratur**

- **Kläring et al.** Model-based Control of CO2-Concentration in Greenhouses at Ambient Levels Increases Cucumber Yield. *Agriculture and Forest Meteorology,* 2007, vol. 143, 208-216
- **Stanghellini C.** Transpiration of greenhouse crops: an aid to climate management. *PhD thesis,* 1987
- **Bakker J.C.** Measurement of canopy transpiration or evapotranspiration in greenhouses by means of a simple vapour balance model. *Agricultural and Forest Meteorology,* 1986, vol. 37, 133-141
- **Schwarz D. ; Kläring, H.-P.** Allometry to estimate leaf area of tomato. *Journal of Plant Nutrition,* 2001, vol. 24 (8), 1291-1309